# EUROPÄISCHE PATENTSCHRIFT

(11) **EP 1 809 921 B1**
(45) Veröffentlichungstag und Bekanntmachung des Hinweises auf die Patenterteilung: **30.04.2008**
(21) Anmeldenummer: 05805698.7
(22) Anmeldetag: 03.11.2005
(51) Int. Cl.: F16D 65/097

(54) **BELAGTRÄGERPLATTE EINER SCHEIBENBREMSE**
LINING SUPPORT PLATE FOR A DISC BRAKE
PLAQUETTE D'UN FREIN A DISQUE

(30) Priorität: 03.11.2004 DE 102004053026
(43) Veröffentlichungstag der Anmeldung: 25.07.2007
(73) Patentinhaber: KNORR-BREMSE SYSTEME FÜR NUTZFAHRZEUGE GMBH, 80809 München (DE)
(72) Erfinder: IRASCHKO, Johann, 85301 Schweitenkirchen (DE); SCHÖNAUER, Manfred, 80995 München (DE)
(74) Vertreter: Mattusch, Gundula
(86) Internationale Anmeldenummer: PCT/EP2005/011733
(87) Internationale Veröffentlichungsnummer: WO 2006/048267

(56) Entgegenhaltungen:
- US-A- 4 498 564
- US-A- 5 125 482
- US-A- 5 941 348
- PATENT ABSTRACTS OF JAPAN Bd. 1998, Nr. 01, 30. Januar 1998 (1998-01-30) -& JP 09 229112 A (AISIN SEIKI CO LTD), 2. September 1997 (1997-09-02)

## Beschreibung

Die vorliegende Erfindung betrifft eine Belagträgerplatte mit mindestens einer Toleranzausgleichsfeder gemäß dem Gattungsbegriff des Anspruches 1.

Belagträgerplatten der gattungsgemäßen Art sind beispielsweise aus der US-A-5941348 oder der JP-A-9229112 bekannt.

Bei Scheibenbremsen, welche sowohl in Personenkraftwagen wie auch in Nutzfahrzeugen verwendbar sind, werden in Belagschächte einführbare und Reibbeläge tragende Belagträgerplatten mit darauf angeordneten Bremsbelägen eingesetzt, welche zum Zwecke der Abbremsung einer Bremsscheibe durch Zuspannmittel an die Bremsscheibe angepresst werden.

Beim Befahren von Bodenunebenheiten treten hohe Beschleunigungskräfte auf, die sich auch auf die Belagträgerplatten auswirken. Zwischen den Belagträgerplatten einerseits und den Belagschächten andererseits ist prinzipbedingt ein Spiel erforderlich., die Notwendigkeit für das angesprochene Spiel ergibt sich einerseits aus dem notwendigen Ausgleich von Fertigungstoleranzen und andererseits aus der Notwendigkeit zum Ausgleich unterschiedlicher thermischer Längenänderungen von Belagträgerplatte und Bremsbelag sowie Belagschacht andererseits im Betrieb. Durch das Vorhandensein des notwendigen Spiels und durch die erwähnten, auf die Belagträgeaplatte einwirkenden Beschleunigungskräfte beim Überfahren von Bodenunebenheiten ergibt sich ein deutlich hörbares Klappergeräusch, das aufgrund des im Fahrzeugbau inzwischen erreichten geringen Innengeräusch-Niveaus immer weniger toleriert wird.

Ein weiterer Faktor für entstehende Klappergeräusche ist darin zu sehen, dass die Bremsbeläge bei Betätigung der Bremse an der auslaufseitigen Abstützfläche im Belagschacht zur Anlage kommen und beim Lösen der Bremse auf die gegenüberliegende Abstützfläche zurückfallen. Hierdurch wird ein deutlich hörbares metallisches Geräusch verursacht, das vor allem im Rangierbetrieb von vielen Kunden als sehr störend bemängelt wird.

Aus den oben genannten Gründen heraus sind bereits Toleranzausgleichsfedern eingesetzt worden, um die Beweglichkeit der Belagträgerplatte und des Bremsbelages beizubehalten, darüber hinaus aber das metallisch harte Aufschlagen der Belagträgerplatte auf entsprechende Abstützflächen weitestgehend zu elemenieren.

Der vorliegenden Erfindung liegt die Aufgabe zugrunde, eine Belagträgerplatte der gattungsgemäßen Art auszuzeigen, die sich durch ein besonders effektive Geräuschdämpfung bei gleichzeitig einfachster Gestaltung der Toleranzausgleichsfeder oder der Toleranzausgleichsfedern auszeichnet, ohne dabei die Restschleifmomente der Beläge nennenswert zu erhöhen.

Diese Aufgabe wird dadurch gelöst, das die Toleranzausgleichsfeder oder die Toleranzausgleichsfedern als Blatt- oder als Schenkelfeder ausgebildet ist bzw. sind, wobei jeweils eine Blattfeder oder ein erster Schenkel einer Schenkelfeder für den Ausgleich der in radialer Richtung und die jeweils andere Blattfeder bzw. der zweite Schenkel einer Schenkelfeder für den Ausgleich der in Umfangsrichtung vorhandenen Toleranzen vorgesehen ist.

Eine derartige Belagträgerplatte zeichnet sich durch eine einfache Gestaltung der Toleranzausgleichsfedern ebenso aus wie durch eine hochwirksame Geräuschdämpfung für alle Bewegungsrichtungen der Belagträgerplatte, da sowohl in radialer wie auch in Umfangsrichtung entsprechend einfache gestaltete Toleranzausgleichsfedern wirksam sind.

Die Blatt- oder Schenkelfedern sind jeweils im Übergangsbereich zwischen der konkaven Unterkante und den kopfseitigen Stirnkanten der Belagträgerplatte angeordnet.

Die Blattfedern für den radialen Toleranzausgleich sind baugleich mit den Blattfedern für den umfangsseitigen Toleranzausgleich.

Soweit Schenkelfedern für den Toleranzausgleich zum Einsatz kommen, ist vorgesehen, dass diese Schenkelfedern spiegelsymmetrisch zu einer Mittelachse ausgeführt sind.

Die letztgenannten Maßnahmen gestatteten den Einsatz von Toleranzausgleichsfedern gleicher Bauart in allen Einsatzbereichen der Belagträgerplatte.

Weitere Merkmale der Erfindung sind Gegenstand weiterer Unteransprüche.

Ausführungsbeispiele der Erfindung sind in den beigefügten Zeichnungen dargestellt und werden im folgenden näher beschrieben.

Es zeigen:
- Figuren 1a bis 1e: verschiedene Ansichten einer Toleranzausgleichsfeder für eine erfindungsgemäße Belagträgerplatte
- Figur 2: eine Teilansicht einer erfindungsgemäßen Belagträgerplatte mit montierter Toleranzausgleichsfeder gemäß den Figuren 1a bis 1e
- Figur 3: eine Ansicht der Belagträgerplatte in Richtung des Pfeiles III in Figur 2
- Figur 4: eine der Figur 2 entsprechende Ansicht einer Belagträgerplatte nach einem weiteren Ausführungsbeispiel der Erfindung
- Figur 5: eine Ansicht in Richtung des Pfeiles V in Figur 4

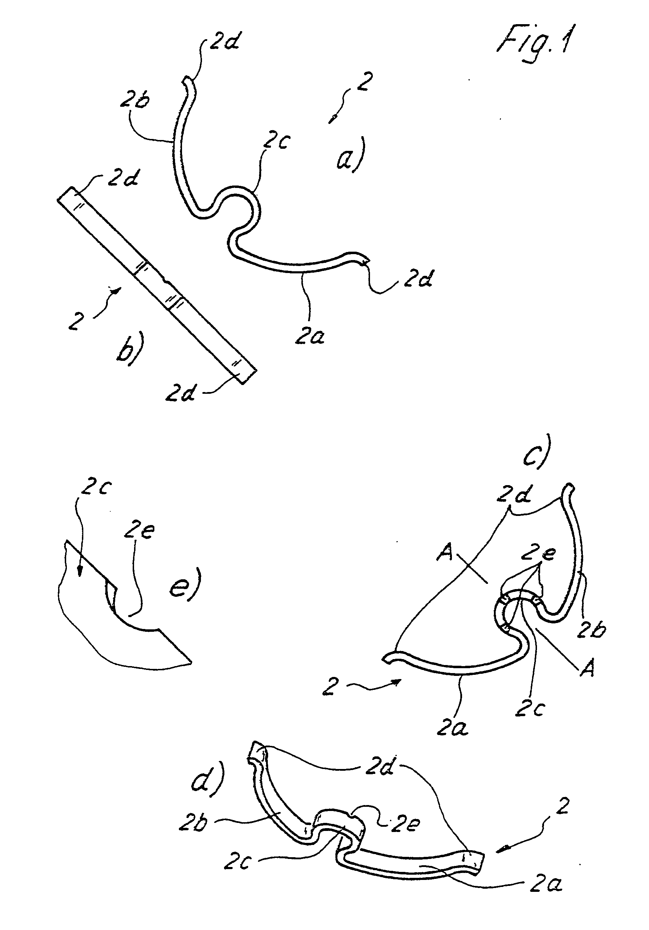

Bei dem in den Figuren 1 bis 3 gezeigten Ausführungsbeispiel der Erfindung ist mit dem Bezugszeichen 1 eine Belagträgerplatte bezeichnet, welche in einen Belagschacht einer Scheibenbremse eines Straßenfahrzeuges einsetzbar ist und eine Toleranzausgleichsfeder 2 aufweist, die in der Lage ist, Toleranzen zwischen dem nicht dargestellten Belagschacht und der Belagträgerplatte 1 auszugleichen, ohne die Beweglichkeit der Belagträgerplatte 1 innerhalb des Belagschachtes einzuschränken.

Die Toleranzausgleichsfeder 2, die in den Figuren 1a bis 1e in verschiedenen Ansichten und sehr detailliert gezeigt ist, weist die Form einer Schenkelfeder auf, die als um eine Mittelachse A-A spiegelsymmetrisch ausgebildete Schenkelfeder ausgebildet ist (siehe insbesondere Figur 1c).

Die Schenkelfeder 2 weist einen ersten Schenkel 2a und einen zweiten Schenkel 2b auf, die in ihren einander zugewandten Endbereichen in ein bogenförmig gewölbtes, mittleres Befestigungsteil 2c übergehen.

An ihren freien Enden sind die beiden Schenkel 2a und 2b mit gegensinnig zur Krümmung der beiden Schenkel 2a und 2b abgebogenen Auflagern 2d ausgestattet.

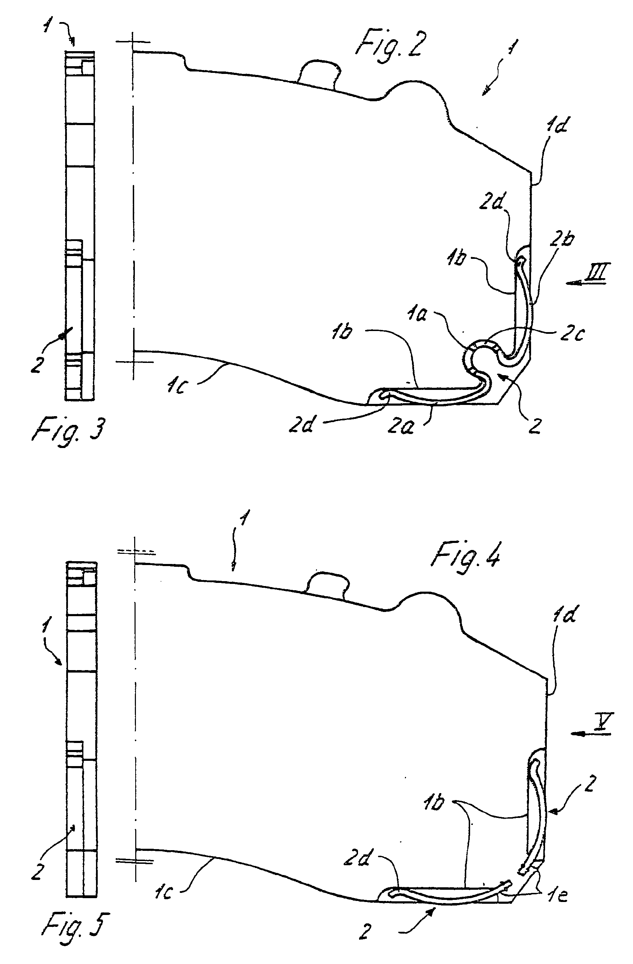

Wie insbesondere Figur 3 zeigt, wird eine derartige Toleranzausgleichsfeder 2 mittels ihres Befestigungsteiles 2c innerhalb einer formidentischen Aussparung 1a der Belagträgerplatte 1 eingesetzt und beispielsweise durch Verstemmen gegenüber der Belagträgerplatte 1 festgelegt. Die jeweiligen Auflager 2d der beiden Schenkel 2a und 2b stützen sich in diesem montierten Zustand auf vorzugsweise geradlinig verlaufenden Stützflanken 1b der Belagträgerplatte 1 ab.

Wie Figur 2 deutlich erkennen lässt, liegt im montierten Zustand der Toleranzausgleichsfeder 2 ein erster Schenkel 2a etwa im Bereich einer konkav ausgebildeten Unterkante 1c und der andere Schenkel 2b im Bereich einer kopfseitigen Stirnkante 1d der Belagträgerplatte 1.

Durch die Gestaltung und Anordnung der Toleranzausgleichsfeder 2 ist diese Toleranzausgleichsfeder 2 in der Lage, sowohl radiale Toleranzen zwischen einer Belagträgerplatte 1 und einem Belagschacht auszugleichen wie auch Toleranzen in Umfangsrichtung.

Die Belagträgerplatte 1 ist in Figur 2 nur zur Hälfte dargestellt, in der nicht dargestellten linken Hälfte der Belagträgerplatte ist bevorzugt eine wie oben beschriebene Toleranzausgleichsfeder in der analogen Stelle befestigt.

Aufgrund der spiegelsymmetrischen Gestaltung der Toleranzausgleichsfeder 2 können die links- und rechtsseitig angeordneten Toleranzausgleichsfedern 2 untereinander baugleich sein.

Figur 1e zeigt, dass die Toleranzausgleichsfeder 2 im Bereich ihres Befestigungsteiles 2c mit als Verstemmmarken dienenden Einbuchtungen 2e versehen sein kann, die das Verstemmen des Befestigungsteiles 2c gegenüber der Belagträgerplatte 1 erleichtern.

Beim Ausführungsbeispiel der Erfindung gemäß den Figuren 4 und 5 sind im Übergangsbereich zwischen der konkaven Unterkante 1c und der sich daran anschließenden kopfseitigen Stirnkante 1d Toleranzausgleichsfedern 2 in Form von baugleichen Blattfedern vorgesehen. Diese Blattfedern sind an ihren einander abgewandt liegenden Bereichen wiederum mit gekrümmten Auflagern 2d zur Abstützung auf Stützflanken 1b der Belagträgerplatte 1 ausgestattet. Die einander zugewandt liegenden Enden der Blattfedern sind zwecks Verbindung mit der Belagträgerplatte 1 in Schlitze 1e der Belagträgerplatte 1 eingeführt und dort wieder vorzugsweise durch Verstemmen oder auch durch Verschweißen festgelegt.

Toleranzausgleichsfedern 2 in Form der in Figur 3 dargestellten Blattfedern können auch auf der nicht dargestellten, linken Seite der Belagträgerplatte angeordnet sein, wobei auch die linksseitigen Blattfedern baugleich sind mit den Blattfedern auf der dargestellten rechten Seite der Belagträgerplatte 1.

Bei beiden Ausführungsbeispielen wird der Vorteil erreicht, dass trotz der Verwendung einfach gestalteter und sowohl links- wie auch rechtsseitig verwendbarer Federn ein Toleranzausgleich zwischen der Belagträgerplatte 1 und einem nicht dargestellten Belagschacht in zwei Richtungen erfolgt.

## Patentansprüche

1. In einen Belagschacht einer Scheibenbremse eines Straßenfahrzeuges einsetzbare Belagträgerplatte (1) mit mindestens einer Toleranzausgleichsfeder (2) zum Ausgleich von Toleranzen zwischen Belagträgerplatte (1) und Belagschacht, wobei die Toleranzausgleichsfeder (2) oder die Toleraaazausgleichsfedern (2) als Platt- oder als Schenkelfeder ausgebildet ist bzw. sind und jeweils eine Blattfeder oder ein erster Schenkel (2a) einer Schenkelfeder für den Ausgleich der in radialer Richtung und die jeweils andere Blattfeder bzw. der zweite Schenkel (2b) einer Schenkelfeder für den Ausgleich der in Umfangsrichtung vorhandenen Toleranzen vorgesehen ist und die Platt- oder Schenkelfedern jeweils im Übergangsbereich zwischen der konkaven Unterkante (1c) und den kopfseitigen Stirnkanten (1d) der Belagträgerplatte (1) angeordnet sind, **dadurch gekennzeichnet, dass** die Blattfedern für den radialen Toleranzausgleich baugleich sind mit den Blattfedern für den Umfangsseitigen Toleranzausgleich bzw. dass die Schenkelfeder oder Schenkelfedern spiegelsymmetrisch zu einer Mittelachse A-A ausgebildet ist bzw. sind.

2. Belagträgerplatte nach Anspruch 1, **dadurch gekennzeichnet, dass** bei Verwendung von Schenkelfedern in beiden Endbereichen der Belagträgerplatte (1) diese Schenkelfedern baugleich sind.

3. Belagträgerplatte nach einem der vorhergehenden Ansprüche, **dadurch gekennzeichnet, dass** die Toleranzausgleichsfedern (2) gegenüber der Belagträgerplatte (1) durch Verstemmen oder auch Verschweißen festgelegt sind.

4. Belagträgerplatte nach einem der vorhergehenden Ansprüche, **dadurch gekennzeichnet, dass** die Schenkelfedern im Übergangsbereich zwischen den beiden Schenkeln (2a, 2b) ein gewölbtes und in eine entsprechende Aussparung (1a) der Belagträgerplatte (1) eingreifendes Befestigungsmittel (2c) aufweisen.

5. Belagträgerplatte nach einem der vorhergehenden Ansprüche, **dadurch gekennzeichnet, dass** die Blattfedern mit einem ihrer Enden jeweils in einen Schlitz (1e) der Belagträgerplatte (1) eingesetzt und dort vorzugsweise durch Verstemmen oder Verschweißen festgelegt sind.

6. Belagträgerplatte nach einem der vorhergehenden Ansprüche, **dadurch gekennzeichnet, dass** die Schenkel (2a, 2b) der Schenkelfedern bzw. die freien Enden der Blattfedern mit auf Stützflanken (1a) der Belagträgerplatte (1) der abgestützten Auflagern (2d) versehen sind.

7. Belagträgerplatte nach einem der vorhergehenden Absprüche, **dadurch gekennzeichnet, dass** die Schenkelfedern im Bereich ihrer Befestigungsteile (2) mit als Verstemmmarken dienenden Ausbuchtungen (2e) ausgestattet sind.

## Claims

1. Pad support plate (1) for installation into a pad well of a disk brake of a road vehicle, with at least one tolerance compensation spring (2) for compensating tolerances between the pad support plate (1) and the pad well, wherein the tolerance compensation spring (2) or springs (2) is or are designed as leaf or leg spring(s), wherein one leaf spring or a first leg (2a) of a leg spring is provided for the compensation of the tolerances present in the radial direction and the other leaf spring or the second leg (2b) of the leg spring is provided for the compensation of the tolerances present in the circumferential direction, and wherein the leaf or leg springs are located in the transitional region between the concave lower edge (1c) and the head-end edges (1d) of the pad support plate, **characterised in that** the leaf springs for the compensation of radial tolerances are identical in construction with the leaf springs for the compensation of circumferential tolerances and **in that** the leg spring or springs is or are designed mirror-symmetrical relative to a central axis A-A.

2. Pad support plate according to claim 1, **characterised in that,** if leg springs are used in both end regions of the pad support plate (1), these leg springs are identical in construction.

3. Pad support plate according to any of the preceding claims, **characterised in that** the tolerance compensation springs (2) are secured relative to the pad support plate (1) by caulking or welding.

4. Pad support plate according to any of the preceding claims, **characterised in that** the leg springs are provided with arched mounting means (2c) for engagement with a corresponding recess (1a) of the pad support plate (1) in the transitional region between the two legs (2a, 2b).

5. Pad support plate according to any of the preceding claims, **characterised in that** the leaf springs are installed with one end into a slot (1e) of the pad support plate (1) and there secured preferably by caulking or welding.

6. Pad support plate according to any of the preceding claims, **characterised in that** the legs (2a, 2b) of the leg springs or the free ends of the leaf springs are provided with supports (2d) supported on supporting flanks (1a) of the pad support plate (1).

7. Pad support plate according to any of the preceding claims, **characterised in that** the leg springs are provided indentations (2e) for use as caulking marks in the region of their mounting parts (2).

## Revendications

1. Plaquette ( 1 ) pouvant être insérée dans un logement de plaquette d'un frein à disque d'un véhicule routier, comprenant au moins un ressort ( 2 ) de compensation de tolérances pour compenser des tolérances entre la plaquette ( 1 ) et le logement de plaquette, dans laquelle le ressort ( 2 ) de compensation de tolérances ou les ressorts ( 2 ) de compensation de tolérances est ou sont réalisé( s ) sous forme de ressort ( s ) à lames ou à branches et qu'un ressort à lames respectif ou une première branche ( 2a ) d'un ressort à branches est prévu pour compenser les tolérances présentes en direction radiale et l'autre ressort à lames respectif ou la deuxième branche ( 2b ) d'un ressort à branches est prévu pour compenser les tolérances présentes en direction circonférentielle, et que les ressorts à lames ou à branches sont respectivement disposés dans la région de transition entre le bord inférieur concave ( 1c ) et les bords frontaux de tête ( 1d ) de la plaquette ( 1 ), **caractérisée en ce que** les ressorts à lames pour la compensation des tolérances radiales sont de construction identique aux ressorts à lames pour la compensation des tolérances circonférentielles, ou **en ce que** le ressort à branches ou les ressorts à branches est ou sont réalisé ( s ) symétriquement par rapport à un axe médian A-A.

2. Plaquette suivant la revendication 1, **caractérisée en ce que**, lorsqu'on utilise des ressorts à branches, ces ressorts à branches sont de construction identique dans les deux régions terminales de la plaquette ( 1 ).

3. Plaquette suivant l'une des revendications précédentes, **caractérisée en ce que** les ressorts ( 2 ) de compensation de tolérances sont fixés par matage ou encore par soudage par rapport à la plaquette ( 1 ).

4. Plaquette suivant l'une des revendications précédentes, **caractérisée en ce que** les ressorts à branches comportent, dans la région de transition entre les deux branches ( 2a, 2b ), un moyen de fixation bombé ( 2c ) qui pénètre dans un évidement correspondant ( 1a ) de la plaquette ( 1 ).

5. Plaquette suivant l'une des revendications précédentes, **caractérisée en ce que** les ressorts à lames sont respectivement insérés par une de leurs extrémités dans une fente ( 1e ) de la plaquette ( 1 ) et y sont de préférence fixés par matage ou soudage.

6. Plaquette suivant l'une des revendications précédentes, **caractérisée en ce que** les branches ( 2a, 2b ) des ressorts à branches ou les extrémités libres des ressorts à lames sont pourvues d'appuis ( 2d ) soutenus sur des flancs de soutien ( 1b ) de la plaquette ( 1 ).

7. Plaquette suivant l'une des revendications précédentes, **caractérisée en ce que** les ressorts à branches sont équipés, dans la région de leurs parties de fixation ( 2 ), d'échancrures ( 2e ) servant de repères de matage.
